# EUROPÄISCHE PATENTSCHRIFT

(11) **EP 2 617 629 B1**
(45) Veröffentlichungstag und Bekanntmachung des Hinweises auf die Patenterteilung: **14.03.2018**
(21) Anmeldenummer: 12151972.2
(22) Anmeldetag: 20.01.2012
(51) Int. Cl.: B62D 25/04, B62D 25/06, B62D 27/02

(54) **Karosserieknoten**
Bodywork nodes
Noeud de carrosserie

(43) Veröffentlichungstag der Anmeldung: 24.07.2013
(73) Patentinhaber: EDAG Engineering GmbH, 65205 Wiesbaden (DE)
(72) Erfinder: Klinker, Jürgen, 71093 Weil im Schönbuch (DE); Schmidt, Stefan, 71126 Gäufelden (DE); Nebel, Jens, 73770 Denkendorf (DE); Dr. Hillebrecht, Martin, 36100 Petersberg (DE)
(74) Vertreter: Schwabe - Sandmair - Marx

(56) Entgegenhaltungen:
- EP-A1- 0 461 345
- WO-A1-00/07867
- WO-A1-2009/149692
- DE-A1-102009 051 036

## Beschreibung

Die Erfindung betrifft einen Karosserieknoten zum Verbinden schalenförmiger Karosseriestrukturen einer Fahrzeugkarosserie. Gegenstand der Erfindung ist der Karosserieknoten als solcher und auch ein Karosseriestrukturenverbund, in dem der Karosserieknoten verbaut ist und das die Karosseriestrukturen verbindende Verbundelement bildet.

Die DE 103 03 568 B4 offenbart einen Karosserieknoten, der einen Querträger und einen zentralen Längsträger einer Karosserie miteinander verbindet und ein Zentrallager für die bewegliche Lagerung einer Fahrzeugachse bildet. Der Karosserieknoten ist aus ineinander geschachtelten offenen Profilen und eingesetzten Verstärkungselementen, die zum Teil als geschlossene Profile gebildet sind, zusammengesetzt, um durch vielfache Materialverdopplungen die erforderliche Steifigkeit zu gewährleisten. Dem geschachtelten Aufbau entsprechend müssen die Strukturkomponenten des Knotens einzeln gefertigt und miteinander gefügt werden, was Aufwand und Kosten in der Bereitstellung des Knotens verursacht und einer Reduzierung des Gewichts Grenzen setzt.

Aus der DE 10 2009 049 214 A1 ist eine Tragstrukturanordnung in einer selbsttragenden Kraftfahrzeugkarosserie bekannt, die ein dünnwandiges Stahlgussbauteil und daran befestigte Strukturbauteile umfasst. Das Stahlgussbauteil weist einen durchgehenden und überwiegend geschlossenen Basisabschnitt auf, der sich in Längsrichtung des Fahrzeugs erstreckt und an den fahrzeuginnenseitig und fahrzeugaußenseitig jeweils hochgestellte Schenkelabschnitte angrenzen. Der innenseitige Schenkelabschnitt läuft in einen horizontalen Verbindungsflansch aus. Der Basisabschnitt trägt ein Bodenblech, das eines der Strukturbauteile bildet. Das Bodenblech liegt auf dem innenseitigen, horizontalen Verbindungsflansch auf und ist an der Innenseite des außenseitigen Schenkelabschnitts abgestützt. Der außenseitige Schenkelabschnitt dient ferner der nicht näher beschriebenen Anbindung eines Radgehäuses. Im und auch seitlich am Basisabschnitt sind ferner Befestigungselemente in Form von Schraubbolzen und Schraubbolzenaufnahmen vorgesehen. Die Ausbildung eines Karosserieknotens als dünnwandiges Stahlgussbauteil trägt zur Gewichtsreduzierung bei. Das Stahlgussbauteil beansprucht aber wegen des Basisabschnitts erheblichen Bauraum und dürfte als Karosserieknoten auf Verwendungen beschränkt sein, in denen der Basisabschnitt in einem Fahrzeugrahmen einen Längsträger oder Längsträgerabschnitt bildet. Ferner ist die Formung des Basisabschnitts gusstechnisch anspruchsvoll, wodurch Kosten entstehen.

Die DE 10 2009 051 036 A1 betrifft eine Verbindungsstruktur für die Verbindung von Strukturbauteilen und Tragstruktur einer Fahrzeugkarosserie. Die Verbindungsstruktur umfasst einen aus Metallguss geformten Verbindungskörper mit angeformten Verstärkungsrippen. Die Verbindungsstruktur weist weiterhin Verstärkungselemente und Einrichtungen, wie zum Beispiel Bohrungen oder Langlöcher, auf, wobei die Einrichtungen mit den Verstärkungselementen einstückig ausgeführt sein können.

Die WO 00/07867 A1 betrifft ein Komponente eines Fahrzeugrahmens, an dem zum Beispiel Elektromotoren, Stoßdämpfer oder andere Teile des Fahrzeugrahmens oder Komponenten der Fahrzeugkarosserie befestigt werden können.

Es ist eine Aufgabe der Erfindung, die Kosten für die Herstellung eines Verbunds schalenförmiger Karosseriestrukturen einer Fahrzeugkarosserie zu reduzieren, die Festigkeit und Steifigkeit des Verbunds aber dennoch zu gewährleisten.

Die Erfindung verbindet schalenförmige Karosseriestrukturen, d. h. Schalenbauteile einer Fahrzeugkarosserie mittels eines Karosserieknotens, der eine Basiswandstruktur und wenigstens eine von der Basiswandstruktur aufragende Verstärkungsrippe aufweist. Die Basiswandstruktur ist als mehrfach gekrümmte Schale geformt. Sie ist über zumindest den überwiegenden Teil ihrer Fläche dünn, dünn jedenfalls im Vergleich zu der vom äußeren Rand der Basiswandstruktur eingeschlossenen Fläche. Die Basiswandstruktur weist eine erste Oberfläche und eine zweite Oberfläche auf, die über die jeweils lokale Wanddicke der Basiswandstruktur gesehen voneinander abgewandt sind. Randbereiche der Basiswandstruktur bilden einen ersten Verbindungsflansch zum Fügen mit einer schalenförmigen ersten Karosseriestruktur und wenigstens einen weiteren, zweiten Verbindungsflansch zum Fügen mit einer schalenförmigen zweiten Karosseriestruktur. Der erste oder der zweite Verbindungsflansch kann entweder eben oder einfach oder aber mehrfach gekrümmt sein, vorteilhafterweise in angeschmiegter Anpassung an einen Verbindungsflansch der zugeordneten Karosseriestruktur. Die erste Oberfläche kann in einem oder mehreren Bereich(en) der Basiswandstruktur einander zugewandte Oberflächenbereiche bilden. Das Gleiche gilt für die zweite Oberfläche, d. h. die zweite Oberfläche kann in einem oder mehreren Bereich(en) der Schale einander zugewandte Oberflächenbereiche bilden. Vorzugsweise weist die Basiswandstruktur wenigstens einen Bereich auf, in dem Oberflächenbereiche der ersten Oberfläche einander zugewandt sind, und weist zusätzlich wenigstens einen weiteren Bereich auf, in dem Oberflächenbereiche der zweiten Oberfläche einander zugewandt sind. So kann die Basiswandstruktur im Ganzen oder vorzugsweise in mehreren Teilbereichen nur lokal konkav, beispielsweise wannenförmig, auch U- oder V-förmig sein, wobei die lokalen Wölbungen vorteilhafterweise in unterschiedliche Richtungen offen sind.

Die schalenförmige Basiswandstruktur ist zwar mehrfach gekrümmt, vorzugsweise um mehrere nicht parallele Raumachsen, aber überall offen, so dass die erste und die zweite Oberfläche jeweils zur Umgebung freie Oberflächen der Schale und des Karosserieknotens im Ganzen sind. Der Begriff "Schale" wird synonym mit dem Begriff "offene Schale" verwendet und besagt, dass die als mehrfach gekrümmte Schale geformte Basiswandstruktur in keinem in Dickenrichtung der Wand erstreckten Querschnitt einen Hohlraum einschließt, wie dies etwa bei einem geschlossenen Hohlprofil der Fall ist. Die Schale bzw. Basiswandstruktur weist zumindest im Wesentlichen die Form eines dreidimensional in einer Presse, beispielsweise Tiefziehpresse, umgeformten Blechs auf, womit jedoch nur der Schalencharakter der Basiswandstruktur umschrieben werden soll. Zur Erfüllung einer oder mehrerer bestimmter Funktion(en) kann oder können von einer der Oberflächen oder beiden Oberflächen eine oder mehrere lokale funktionale Struktur(en) abragen, auch eine oder mehrere Hohlstruktur(en). Solch eine von der Oberfläche der Basiswandstruktur aufragende funktionale Struktur stellt die wenigstens eine Verstärkungsrippe dar. Sie dient der Erhöhung der Steifigkeit des Karosserieknotens, beispielsweise der Schubsteifigkeit oder der Verwindungssteifigkeit. Die wenigstens eine Verstärkungsrippe kann von der Basiswandstruktur allseits frei aufragen oder an beiden Enden jeweils oder nur an einem ihrer Enden in die am betreffenden Ende entsprechend gekrümmte Basiswandstruktur übergehen, indem sie sich beispielsweise in einem lokal V-förmigen Querschnitt der Basiswandstruktur bis zu den einander zugewandten Schenkel des V-förmigen Querschnitts erstreckt.

Der Karosserieknoten ist erfindungsgemäß somit im Ganzen in Schalenbauweise ausgeführt und als offener Schalenkörper geformt, obgleich mit einer oder mehreren von der ersten oder der zweiten Oberfläche der schalig geformten Basiswandstruktur aufragenden funktionalen Struktur(en). Die schalenförmige Basiswandstruktur und die Verstärkungsrippe sind in einem Guss gemeinsam als ein dünnwandiger Metallgusskörper, vorzugsweise Stahlgusskörper, geformt. Aufgrund der Schalenform kann der Karosserieknoten an die Form der zu verbindenden Karosseriestrukturen, die ebenfalls Schalenbauteile sind, besonders gut angepasst und in den mit ihm als Befestigungselement gebildeten Verbund organisch eingepasst werden. Sperrige Hohlräume werden vermieden. Mittels der integral im Guss geformten Verstärkungsrippe, die durch eine oder mehrere weitere Verstärkungsrippe(n) ergänzt sein kann, wird dennoch die erforderliche Steifigkeit erzielt. Der Karosserieknoten kann aufgrund der erfindungsgemäßen Gestaltung platzsparend kleine Gesamtabmessungen aufweisen und im Karosseriestrukturenverbund auf engem Raum die Verbindungsfunktion erfüllen. Durch den Einsatz eines Gussknotens, vorzugsweise in dünnwandigem Stahlguss, können die im Fahrzeugbetrieb aufzunehmenden Kräfte oder Momente direkt in kleinquerschnittigen Strukturen, wie insbesondere die wenigstens eine Verstärkungsrippe und die Basiswandstruktur, aufgenommen werden. Hierdurch wird eine gleichmäßige Lastverteilung in die durch den Knoten verbundenen Karosseriestrukturen und in der Folge eine Verbesserung der globalen Fahrzeugsteifigkeit erreicht. Der Karosserieknoten eignet sich in idealer Weise zur Schaffung eines Verbunds schalenförmiger Karosseriebleche und grundsätzlich als Verbindungsknoten an Stellen, an denen für die Platzierung von Knotenelementen, wie sie in Space-Frame-Karosserien Verwendung finden, kein Platz ist. Der Verbund kann insbesondere Teil einer selbsttragenden Karosserie sein.

Die Verstärkungsrippe erstreckt sich in Richtung auf den ersten Verbindungsflansch und bis zu einem äußeren Rand des ersten Verbindungsflansches, oder in Richtung auf und bis zu einem äußeren Rand des zweiten Verbindungsflansches. Die Verstärkungsrippe weist in Richtung auf den äußeren Rand des auf diese Weise verstärkten Verbindungsflansches zu, der bei Herstellung des Verbunds der Karosseriestruktur zugewandt ist, die mit dem verstärkten Verbindungsflansch gefügt wird. Das Wort "oder" wird hier wie auch sonst im Sinne der Erfindung in seiner üblichen logischen Bedeutung als "inklusiv oder" verstanden, umfasst also sowohl die Bedeutung von "entweder ... oder" als auch die Bedeutung von "und", soweit sich aus dem jeweiligen Zusammenhang nicht ausschließlich nur etwas anderes ergeben kann. Bezogen auf beispielsweise die Erstreckung der wenigstens einen Verstärkungsrippe bedeutet dies, dass die Verstärkungsrippe sich in ersten Varianten in Richtung auf und bis in den ersten Verbindungsflansch, aber nicht in Richtung auf oder nicht bis in den zweiten Verbindungsflansch, in zweiten Varianten in Richtung auf und bis in den zweiten Verbindungsflansch, aber nicht in Richtung auf oder nicht bis in den ersten Verbindungsflansch und in dritten Varianten sowohl in Richtung auf und bis in den ersten Verbindungsflansch als auch in Richtung auf und bis in den zweiten Verbindungsflansch erstreckt.

Um eine von einem der Verbindungsflansche aufzunehmende Kraft, beispielsweise eine Schubkraft, in Richtung auf den anderen der Verbindungsflansche zu übertragen, erstreckt sich die Verstärkungsrippe vorzugsweise in Richtung auf den ersten Verbindungsflansch und in Richtung auf den zweiten Verbindungsflansch. Die Verstärkungsrippe kann sich unter diesem Aspekt wie vorstehend erläutert insbesondere bis in wenigstens einen der Verbindungsflansche, vorteilhafterweise bis zum äußeren Rand des ersten oder des zweiten Verbindungsflansches erstrecken, um auch unmittelbar den betreffenden Flansch zu verstärken.

Ist der Karosserieknoten dafür vorgesehen, vom ersten oder dem zweiten Verbindungsflansch auf den jeweils anderen dieser Verbindungsflansche zumindest in einem bestimmten Lastfall in erster Linie Schub- oder Zugkräfte zu übertragen, ist der die Verbindungsflansche verbindende Kraftübertragungsquerschnitt der Basiswandstruktur bevorzugt nur in solch einem Ausmaß gekrümmt, wie es erforderlich ist, um im Verbund von der mit dem ersten Verbindungsflansch verbundenen Karosseriestruktur zu der mit dem zweiten Verbindungsflansch verbundenen Karosseriestruktur überzuleiten. Vorteilhafterweise ist die Basiswandstruktur in diesem Kraftübertragungsquerschnitt über einen Winkel von weniger als 180°, vorzugsweise weniger als 120° gekrümmt, gerechnet von Verbindungsflansch zu Verbindungsflansch, so dass der Kraftübertragungsquerschnitt keine parallelen Schenkel aufweist. Bei einem von Verbindungsflansch zu Verbindungsflansch wannenförmigen oder noch ausgeprägter U-förmigen Kraftbübertragungsquerschnitt müsste die in solch einer Querschnittsform erhöhte Biegebeanspruchung durch Verstärkung der wenigstens einen Verstärkungsrippe oder Formung einer oder mehrerer weiterer Verstärkungsrippe(n) kompensiert werden. Vorteilhafterweise erstreckt sich die Verstärkungsrippe auf der in solchen Ausführungen konkaven Seite des Kraftübertragungsquerschnitts und überspannt den Kraftübertragungsquerschnitt vom ersten bis zum zweiten Verbindungsflansch.

Die Verstärkungsrippe kann selbst einen weiteren, dritten Verbindungsflansch bilden, beispielsweise für die erste oder die zweite Karosseriestruktur oder eine optionale weitere Karosseriestruktur, die sich zwischen der ersten und der zweiten Karosseriestruktur erstreckt und mit der ersten oder der zweiten Karosseriestruktur zur Herstellung des Verbunds gefügt wird. Dies schließt auch Ausführungen ein, in denen die Verstärkungsrippe einen gemeinsamen Verbindungsflansch für mehrere Karosseriestrukturen bildet.

Der erste Verbindungsflansch und der zweite Verbindungsflansch sind vorteilhafterweise jeweils so geformt, dass der Karosserieknoten im Bereich der Verbindungsflansche mit der ersten Oberfläche oder der zweiten Oberfläche in eine Richtung normal zu dieser Oberfläche und somit von der Seite an die jeweilige Karosseriestruktur oder die jeweilige Karosseriestruktur von der Seite an den Karosserieknoten anlegbar ist. Weist der Karosserieknoten wie bevorzugt einen oder mehrere weitere(n) Verbindungsflansch(e) auf, gilt dies bevorzugt auch in Bezug auf jeden weiteren Verbindungsflansch. Der erste und der zweite Verbindungsflansch, auch ein oder mehrere, weitere(r) Verbindungsflansch(e), weist oder weisen vorzugsweise jeweils eine Form auf, wie sie bei umgeformten Blechen üblich ist.

In bevorzugten Ausführungen ist an der Basiswandstruktur wenigstens ein Befestigungselement vorgesehen und fest mit der Basiswandstruktur verbunden. Das Befestigungselement kann separat von der Basiswandstruktur geformt und fest mit dieser gefügt, sein, beispielsweise mittels Schweißverbindung, bevorzugt ist es aber im Gussprozess mit der Basiswandstruktur gemeinsam geformt. Das Befestigungselement kann am äußeren Rand der Basiswandstruktur vorgesehen sein. Bevorzugter ist es innerhalb des äußeren Rands der Basiswandstruktur vorgesehen. Es dient der Befestigung der ersten oder der zweiten Karosseriestruktur oder vorzugsweise einer weiteren Fahrzeugstruktur. Die weitere Fahrzeugstruktur kann eine weitere Karosseriestruktur sein. Sie kann aber insbesondere auch eine Radachse oder Radaufhängung sein. Ein relativ zur Karosserie bewegliches Anbauteil, etwa eine Fahrzeugtür, eine Motorhaube oder insbesondere eine Heckklappe, ist ebenfalls eine bevorzugte Fahrzeugstruktur, die unmittelbar über das Befestigungselement am Karosserieknoten abgestützt werden kann.

Das Befestigungselement ragt in ersten Ausführungen von der ersten Oberfläche oder der zweiten Oberfläche der Basiswandstruktur auf. Es kann, wie vorstehend erwähnt, im Gussprozess mit der Basiswandstruktur und der Verstärkungsrippe gemeinsam geformt sein. Das Befestigungselement kann in den ersten Ausführungen beispielsweise ein Schraubbolzen sein, bevorzugter ist es eine Schraubbolzenaufnahme. Ist das Befestigungselement eine Aufnahme für einen Schraubbolzen oder ein andersartiges Eingriffselement wie etwa ein Steck- oder Nietbolzen, so weist es eine von der jeweiligen Oberfläche aufragende Umfangswand auf, die einen entsprechend aufragenden Hohlraum umgibt, der in einer Draufsicht auf die andere Oberfläche der Basiswandstruktur eine Öffnung aufweist, durch die zum Herstellen der Verbindung das Eingriffselement einführbar und im Eingriff mit einer im Hohlraum gebildeten Eingriffsfläche unter Einschluss eines Stoff- oder Kraftschlusses befestigbar oder rein formschlüssig fixierbar ist. Handelt es sich um die Aufnahme für einen Schraubbolzen, ist ein Schraubgewinde für eine Schraubverbindung mit dem Schraubbolzen an der vorzugsweise unmittelbar die Eingriffsfläche bildenden Umfangswand vorgesehen.

Eine vorteilhaft steife Abstützung über das Befestigungselement kann dadurch erhalten werden, dass die Verstärkungsrippe sich an einer Seite des Befestigungselements, vorzugsweise auch an einer anderen Seite des Befestigungselements, bis zu dem Befestigungselement erstreckt. Bevorzugt schneidet sie das Befestigungselement und erstreckt sich an beiden Seiten bis unmittelbar an das Befestigungselement, wodurch eine besonders wirksame Aussteifung des Befestigungselements erzielt wird. Ragt das Befestigungselement wie auch die Verstärkungsrippe von der ersten Oberfläche auf, kann das Befestigungselement ein Teil der Verstärkungsrippe sein. Die Integration eines Befestigungselements, das wie vorstehend erläutert als Aufnahme für ein Eingriffsglied dient, in die Verstärkungsrippe ist im Hinblick auf geringes Gewicht und auch hohe Steifigkeit am Ort des Eingriffs von Vorteil. Die Verstärkungsrippe reicht in derartigen Ausführungen vorteilhafterweise bis unmittelbar an den Eingriff von Aufnahme und Eingriffsglied heran, da die Verstärkungsrippe einen Teil der Umfangswand der Aufnahme und auch unmittelbar der Eingriffsfläche bildet.

In Weiterbildungen ragt von der ersten Oberfläche oder der zweiten Oberfläche der Basiswandstruktur wenigstens eine weitere Verstärkungsrippe auf. Weist der Karosserieknoten das wenigstens eine Befestigungselement auf, kann oder können sich auch die eine oder mehreren weitere(n) Verstärkungsrippe(n) an einer Seite des Befestigungselements, vorzugsweise auch an einer anderen Seite des Befestigungselements, bis zu dem Befestigungselement erstrecken. Für die optionale weitere oder die optional mehreren weiteren Verstärkungsrippen gilt das zu der wenigstens einen Verstärkungsrippe Gesagte ebenfalls. Die Verstärkungsrippen, nämlich die wenigstens eine und die wenigstens eine weitere Verstärkungsrippe, weisen zumindest bei dem Befestigungselement unter einem Winkel größer 0° und kleiner 180° zueinander. Vorzugsweise stehen sie zumindest am Befestigungselement kreuzförmig zueinander.

In Weiterbildungen dient der Karosserieknoten nicht nur als Verbundelement innerhalb der Karosserie, sondern erfüllt zusätzlich die Funktion einer Abstützung für eine relativ zum Verbund bewegliche Fahrzeugstruktur oder die Funktion der Lagerung oder Aufnahme eines Aggregats, beispielsweise eines Antriebsmotors oder Dämpfers für solch eine bewegliche Fahrzeugstruktur. Die bewegliche Fahrzeugstruktur kann insbesondere eine Radachse des Fahrzeugs oder ein bewegliche Anbauteil wie insbesondere eine Heckklappe sein. Entsprechend kann an oder in der Basiswandstruktur ein Befestigungselement, insbesondere das bereits erläuterte Befestigungselement, für die Befestigung und Abstützung einer Radaufhängung oder ein Lagerungselement für eine relativ zum Karosserieknoten bewegliche Lagerung eines Anbauteils, vorzugsweise einer Heckklappe, oder eines Dämpfers eines bewegliches Anbauteils oder eine Befestigungsstruktur für die Befestigung solch eines Lagerungselements vorgesehen sein. Die Basiswandstruktur kann durch angepasste Gestaltung solch eine Befestigungsstruktur bilden. Das Lagerungselement kann separat von der Basiswandstruktur geformt und mit der Basiswandstruktur gefügt oder im Gussprozess gemeinsam mit der Basiswandstruktur und geformt sein.

Der Karosserieknoten kann das Verbund- bzw. Knotenelement für einen seitlich in Längsrichtung des Fahrzeugs verlaufenden Schweller und einen vorderen oder vorzugsweise hinteren Längsträger der Karosserie bilden. Mit diesen beiden Karosseriestrukturen kann als weitere Karosseriestruktur über den Karosserieknoten ein vorderer oder vorzugsweise hinterer Querträger der Karosserie oder wie bereits erwähnt eine Radachse des Fahrzeugs in dem Karosseriestrukturenverbund verbunden sein. In anderen Ausführungen bildet der Karosserieknoten einen Dachknoten, vorzugsweise einen hinteren Dachknoten, der eine der Säulen der Karosserie, mit einer Dachquerstrebe verbindet. Bevorzugt handelt es sich um eine hintere Säule, beispielsweise die D-Säule einer Limousine, und entsprechend eine hintere Dachquerstrebe. Als weitere Karosseriestruktur kann eine seitliche Dachstrebe über den Karosserieknoten mit den beiden genannten Karosseriestrukturen verbunden sein. Die seitliche Dachstrebe und die Säule können alternativ aber auch unmittelbar miteinander gefügt oder in einem Stück geformt und entsprechend als Einheit mit dem Karosserieknoten gefügt sein.

In Ausführungen, in denen der Karosserieknoten der Abstützung eines Antriebs dient, weist der Karosserieknoten eine Befestigungsstruktur zur Befestigung des Antriebs oder eine Aufnahme für den Antrieb, vorzugsweise eine Befestigungsstruktur und eine Aufnahme für den Antrieb auf. Dass der Karosserieknoten eine Aufnahme für einen Antrieb bildet, bedeutet, dass er nicht nur im Hinblick auf seine die Kräfte und Momente verteilende Funktion geformt ist, sondern im Rahmen dieser Grundfunktion auch noch einen Aufnahmeraum bildet, in dem der Antrieb zumindest teilweise in dem Sinne aufgenommen ist, dass ihm an unterschiedlichen Seiten Wandbereiche der Basiswandstruktur zugewandt gegenüberliegen, so dass er zumindest nicht gänzlich über den Karosserieknoten vorragt, sondern platzsparend zumindest teilweise hinter der Basiswandstruktur zurückstehend angeordnet werden kann bzw. im gefügten Zustand entsprechend platzsparend angeordnet ist. Bildet der Karosserieknoten die Aufnahme, kann die Verstärkungsrippe oder eine weitere Verstärkungsrippe in vorteilhaften Ausführungen die Aufnahme überspannen, sich also bis zu die Aufnahme begrenzenden Seitenwänden der Basiswandstruktur erstrecken. Vorteilhafterweise sind im Bereich der Aufnahme oder Befestigungsstruktur wenigstens eine, vorzugsweise mehrere Verstärkungsrippen geformt. Obgleich für die Abstützung eines Antriebs vorzugsweise ein Karosseriekrzoten mit allen Merkmalen des Anspruchs 1 zum Einsatz gelangt, ist die Abstützung eines Antriebs an einem mehrere Karosseriestrukturen verbindenden Karosserieknoten auch grundsätzlich von Vorteil, so dass die Anmelderin es sich vorbehält, auf einen Karosserieknoten entsprechend den Merkmalen (a) bis (d) und (g), der ferner als dünnwandiger Metallgusskörper, vorzugsweise Stahlgusskörper, geformt ist, eine Anmeldung zu richten, soweit dieser Karosserieknoten der Abstützung eines Antriebs für ein Anbauteil oder eine andere Fahrzeugstruktur dient. Anstelle eines Antriebs kann auch eine andere, nicht zur Karosserie gehörende funktionale Komponente eines Fahrzeugs treten, beispielsweise ein Dämpfer oder eine Federungseinrichtung.

Der erfindungsgemäße Karosserieknoten kann zwar grundsätzlich aus einem Leichtmetall, beispielsweise einer Aluminiumlegierung, gegossen sein. Bevorzugt handelt es sich jedoch um einen dünnwandigen Stahlgussknoten. Ein Stahlgussknoten kann im Vergleich mit einem Leichtmetallgussknoten insbesondere geringere Wandstärken oder geringere Gesamtabmessungen aufweisen, so dass der Karosserieknoten den geometrischen Gegebenheiten am Einbauort und im Sinne einer gleichmäßigen Lastverteilung besonders gut angepasst bzw. optimiert werden kann. Bei dem Gussstahl handelt es sich vorzugsweise um einen hochvergüteten Stahl, der Edelstählen vergleichbare Eigenschaften aufweist. Eine Ausführung in Stahl ist auch wegen der im Karosseriebau überwiegend verwendeten Stahlbleche von Vorteil, da Kontaktkorrosion kein oder allenfalls ein leicht beherrschbares Problem darstellt und ein Stahlgussknoten auch hinsichtlich der Verschweißbarkeit mit dem Material nach üblichen Karosserieblechen vorteilhaft ist. Die Fügeverbindungen oder zumindest ein Teil der Fügeverbindungen des Karosserieknotens mit den Karosseriestrukturen sind vorzugsweise Schweißverbindungen, bevorzugt Punktschweißverbindungen. Wegen der offenschaligen Form des Karosserieknotens können Schweißverbindungen vorteilhafterweise mittels üblicher Schweißzangen hergestellt werden.

Was die mechanischen Eigenschaften des Gussstahlwerkstoffs anbetrifft, so sollte der Werkstoff im fertigen Karosserieknoten zumindest nach Durchführung einer oder mehrerer optionaler Wärmebehandlungsstufen wenigstens eine, bevorzugt mehrere der nachfolgend in einer Tabelle zusammengefassten Bedingungen erfüllen:

| | bevorzugt | stärker bevorzugt |
|---|---|---|
| 0,2%-Fließgrenze | ≥ 350 MPa | ≥ 500 MPa |
| Zugfestigkeit | ≥ 550 MPa | ≥ 650 MPa |
| Bruchdehnung | ≥ 10 % | ≥ 15 % |

Bezüglich der Abmessungen des Karosserieknotens wird es bevorzugt, wenn der Karosserieknoten als solcher, d. h. im Ganzen, in einen Würfel passt, der eine maximale Kantenlänge von vorzugsweise höchstens 40 cm, bevorzugter höchstens 30 cm aufweist.

Vorteilhafte Merkmale werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden je einzeln und in jeder Merkmalskombination die Gegenstände der Ansprüche und auch die vorstehend beschriebenen Ausgestaltungen vorteilhaft weiter. Es zeigen:
- Figur 1: ein erstes Ausführungsbeispiel für einen Verbund von Karosseriestrukturen mit einem erfindungsgemäßen Karosserieknoten;
- Figur 2: den Karosseriestrukturenverbund des ersten Ausführungsbeispiels in einer Seitenansicht;
- Figur 3: den Karosserieknoten des ersten Ausführungsbeispiels in isometrischer Darstellung;
- Figur 4: den Karosserieknoten des ersten Ausführungsbeispiels in einer anderen isometrischen Darstellung;
- Figur 5: ein zweites Ausführungsbeispiel für einen Verbund von Karosseriestrukturen mit einem erfindungsgemäßen Karosserieknoten,
- Figur 6: den Karosserieknoten des zweiten Ausführungsbeispiels in einer isometrischen Darstellung; und
- Figur 7: den Karosserieknoten des zweiten Ausführungsbeispiels in einer anderen isometrischen Darstellung.

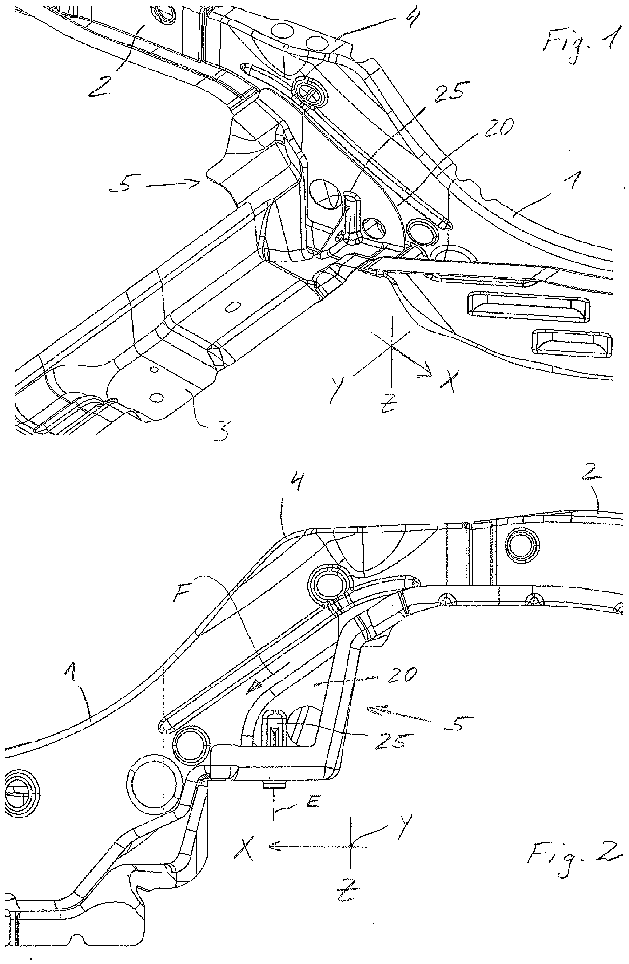

Die Figuren 1 und 2 zeigen einen Verbund von Karosseriestrukturen eines Fahrzeugs. Der Verbund umfasst eine erste Karosseriestruktur 1, eine zweite Karosseriestruktur 2, eine dritte Karosseriestruktur 3, eine vierte Karosseriestruktur 4 und einen Karosserieknoten 5, der die Karosseriestrukturen 1 bis 4 dauerhaft fest verbindet. Die Karosseriestrukturen 1 bis 4 sind in Schalenbauweise, beispielhaft als Blechschalenbauteile, ausgeführt. Der Karosserieknoten 5 ist der Schalenbauweise der Strukturen 1 bis 4 entsprechend ebenfalls in Schalenbauweise ausgeführt. Er ist im Ganzen ein offener dünnwandiger Schalenkörper.

Der Karosserieknoten 5 ist, wie insbesondere in der isometrischen Darstellung der Figur 1 zu erkennen, an die an ihn angeschlossenen und mit ihm als Verbundelement den Verbund bildenden Karosseriestrukturen 1 bis 4 der Form nach angepasst, indem er die von ihm abzweigenden Karosseriestrukturen 1, 2 und 3 organisch bzw. gleichmäßig verlängert, so dass der gesamte Verbund wie ein einstückig geformtes Schalenbauteil wirkt. Bei der Karosserie, dessen Bestandteil der Verbund ist, handelt es sich um eine selbsttragende Karosserie eines Personenkraftwagens. Der Karosserieknoten 5 wirkt mit vorzugsweise weiteren, der Art nach gleichen Karosserieknoten als versteifendes Element der Karosserie. Im Ausführungsbeispiel ist die Karosseriestruktur 1 ein Schweller, der Teil der Außenhaut des Fahrzeugs bildet und auch die Funktion eines mittleren Längsträgers der Karosserie ausübt. Die Karosseriestruktur 2 ist ein hinterer Längsträger der Karosserie. Bei der Karosseriestruktur 3 handelt es sich um einen hinteren Querträger. Der Karosserieknoten 5 ist mit jeder der Karosseriestrukturen 1 bis 4 jeweils unmittelbar fest verbunden. Die als Überbrückungsstruktur dienende Karosseriestruktur 4 ist mit dem Karosserieknoten 5 und auch mit jeder der Karosseriestrukturen 1 und 2 jeweils unmittelbar fest verbunden. Bei den Verbindungen kann es sich insbesondere um Schweißverbindungen handeln. Grundsätzlich sind jedoch auch andere Fügetechniken einsetzbar, entweder alternativ zu Schweißverbindungen oder vorzugsweise ergänzend, wie etwa Klebeverbindungen. Andererseits handelt es sich bei dem Karosserieknoten 5 vorteilhafterweise um ein in seinen Gesamtabmessungen kleines Bauteil, so dass der Knoten 5 für eine Herstellung des Verbunds nur mittels Klebeverbindung nur vergleichsweise kleiner Klebeflächen zur Verfügung stellt. Der Karosserieknoten 5 passt in einen Würfel mit einer maximalen Knotenlänge von vorzugsweise höchstens 40 cm, bevorzugter höchstens 30 mm.

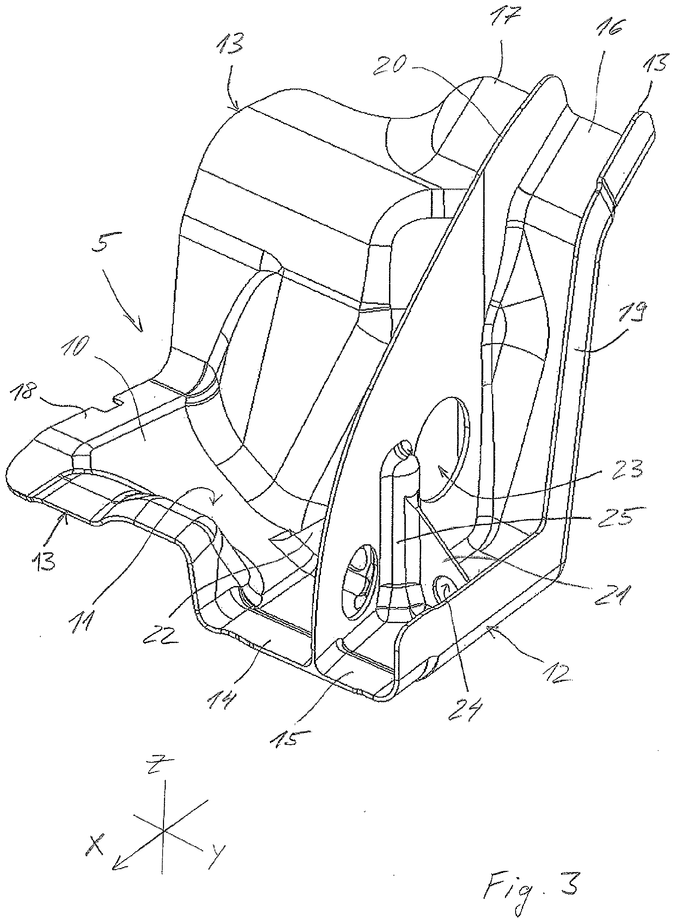

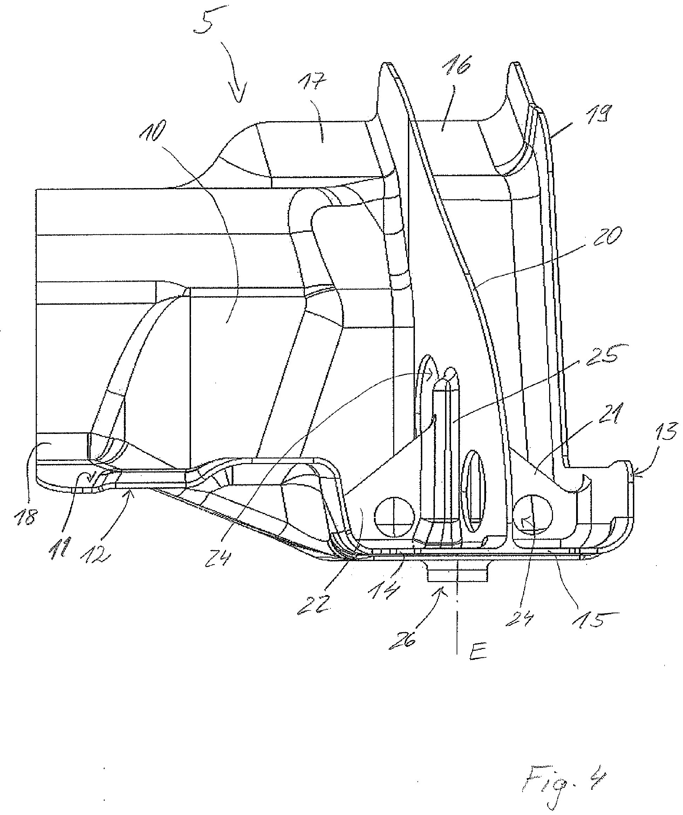

Die Figuren 3 und 4 zeigen den Karosserieknoten 5 als solchen, vor dem Fügen mit den Karosseriestrukturen 1 bis 4, in jeweils einer anderen perspektivischen Sicht. Der im Ganzen in offener Schalenbauweise vorliegende Karosserieknoten 5 weist eine schalenförmige Basiswandstruktur 10 und an der Basiswandstruktur 10 angeformte funktionale Strukturen wie etwa Verstärkungsrippen 20, 21, 22 und ein Befestigungselement 25 auf. Die Basiswandstruktur 10 ist eine um unterschiedliche, nicht parallele Raumachsen gekrümmte Wand geringer Wandstärke. Sie bildet eine offene Schale als Grundstruktur des Karosserieknotens 5. Die Wandstärke und auch die Form der Basiswandstruktur 10 sind im Hinblick auf die aufzunehmenden Lasten im Sinne einer gleichmäßigen Lastverteilung optimiert, und die Form ist im Hinblick auf die Geometrien der anzuschließenden Karosseriestrukturen 1 bis 4 angepasst. Die Wandstärke kann zwar über die gesamte Basiswandstruktur 10 konstant sein, zweckmäßigerweise wird sie jedoch zur möglichst gleichmäßigen Verteilung der aufzunehmenden Lasten von Ort zu Ort variieren. Die Wandstärke beträgt überall oder zumindest in einem weit überwiegenden Anteil der Fläche der Basiswandstruktur 10 vorzugsweise zwischen 1 mm und 3 mm.

Die als dünne Schale geformte Wandstruktur 10 weist eine überall freie erste Oberfläche 11 und eine ebenfalls überall freie zweite Oberfläche 12 auf, zwischen denen die Wandstärke gemessen wird. Der Begriff "freie Oberfläche" soll besagen, dass die beiden Oberflächen 11 und 12, die auch als Oberseite und Unterseite der Basiswandstruktur 10 und des Karosserieknotens 5 im Ganzen bezeichnet werden können, keine Innenflächen eines um eine Achse umlaufend geschlossenen Hohlraums, sondern äußere, zur Umgebung des Karosserieknotens 5 weisende Oberflächen 11 und 12 sind. Entsprechend weist die Basiswandstruktur 10 einen die gesamte Basiswandstruktur 10 umgebenden äußeren Rand 13 auf.

Die Basiswandstruktur 10 bildet mehrere Verbindungsflansche, die sich wie bevorzugt, obgleich nur beispielhaft, jeweils bis zum äußeren Rand 13 erstrecken und über den äußeren Rand 13 gesehen der Anordnung der Karosseriestrukturen 1 bis 4 entsprechend angeordnet sind. Bei den Verbindungsflanschen handelt es sich um einen durch die Verstärkungsrippe 20 in zwei Teilbereiche 14 und 15 unterteilten ersten Verbindungsflansch für den Anschluss der Karosseriestruktur 1, einen durch die Verstärkungsrippe 20 ebenfalls in zwei Teilbereiche 16 und 17 unterteilten zweiten Verbindungsflansch für den Anschluss der zweiten Karosseriestruktur 2 und einen dritten Verbindungsflansch 18 für den Anschluss der dritten Karosseriestruktur 3.

Wie aus der Zusammenschau der Figuren 1 bis 4 zu erkennen ist, wird die als Überbrückungsstruktur dienende Karosseriestruktur 4 ebenfalls an den ersten Verbindungsflansch 14, 15 und den zweiten Verbindungsflansch 16, 17 angeschlossen. Im Ausführungsbeispiel sitzt die Karosseriestruktur 4 in den Teilbereichen 15 und 16 jeweils auf der ersten Oberfläche 11 und ist im aufsitzenden Bereich stoffschlüssig mit dem Teilbereich 15 des ersten und dem Teilbereich 16 des zweiten Verbindungsflansches verbunden, bevorzugt jeweils mittels Schweißverbindung. Die Karosseriestruktur 4 steht in Längsrichtung X über den Karosserieknoten 5, d. h. über beide Verbindungsflansche 14, 15 und 16, 17 vor. In den vorstehenden Bereichen ist die Karosseriestruktur 4 mit den angrenzenden Karosseriestrukturen 1 und 2 jeweils fest gefügt, vorzugsweise jeweils mittels Schweißverbindung. Die Karosseriestruktur 1 ist des Weiteren mit dem Teilbereich 14 des ersten Verbindungsflansches auch unmittelbar mit dem Karosserieknoten 5 fest gefügt, vorzugsweise mittels Schweißverbindung. Die Karosseriestruktur 2 ist mit dem Karosserieknoten 5 ebenfalls unmittelbar fest gefügt, vorzugsweise mittels Schweißverbindung, nämlich mit dem Teilbereich 17 des zweiten Verbindungsflansches. Der Karosserieknoten 5 sitzt mit seiner Oberfläche 12 im Bereich seines ersten Verbindungsflansches 14, 15 auf einem Verbindungsflansch der Karosseriestruktur 1 und im Bereich seines zweiten Verbindungsflansches 16, 15 auf einem Verbindungsflansch der Karosseriestruktur 2 auf und ist dort vorzugsweise jeweils mittels Schweißverbindung gefügt.

Die Verstärkungsrippe 10 erstreckt sich in Richtung einer zwischen den Karosseriestrukturen 1 und 2 zu übertragenden Schubkraft F, für die in der Seitenansicht der Figur 2 ein Richtungspfeil eingezeichnet ist. Entsprechend dem Einbau des Karosserieknotens 5 zwischen den Längskräfte übertragenden Karosseriestrukturen 1 und 2 weist die vom Karosserieknoten 5 aufzunehmende Schubkraft F mit zumindest einer wesentlichen Richtungskomponente in Längsrichtung X der Karosserie. Die Schubkraft F ist entsprechend eines Höhenversatzes und auch eines Querversatzes, den die beiden Karosseriestrukturen 1 und 2 zueinander aufweisen bezüglich der Hochachse Z und der Querachse Y der Karosserie geneigt. Der Karosserieknoten 5 ist hinsichtlich der aufzunehmenden Schubkraft F insbesondere auf den Lastfall eines Heckaufpralls ausgelegt. Die Basiswandstruktur 10 und die Verstärkungsrippe 20 sind so geformt und in Bezug auf ihre Wandstärken dimensioniert, dass sich die in solch einem Lastfall zu erwartenden Schubkräfte F über den Karosserieknoten 5 verteilen und in die angeschlossenen Karosseriestrukturen eingeleitet werden.

Die Basiswandstruktur 10 ist zur Reduzierung von Biegebeanspruchungen zwischen dem ersten Verbindungsflansch 14, 15 und dem zweiten Verbindungsflansch 16, 17, also in dem die Schubkraft F übertragenden Bereich, nur so weit gekrümmt, wie dies zur Überbrückung des zwischen den Anschlussstellen der Karosseriestrukturen 1 und 2 bestehenden Höhenversatzes erforderlich ist. Im Ausführungsbeispiel weist die Basiswandstruktur 10 in dem die beiden Verbindungsflansche 14, 15 und 16, 17 miteinander verbindenden Schalenbereich die Form eines flachen V auf, wobei die beiden Schenkel des V miteinander einen Winkel von mehr als 90° einschließen und die beiden Schenkel nicht über eine ausgeprägte Kante, sondern relativ weich gebogen ineinander übergehen. Der die beiden Verbindungsflansche miteinander verbindende Schalenbereich ist entsprechend über einen Winkel von weniger als 90° gekrümmt, wobei der Winkelbereich der Krümmung gegenüber einer Ebene gemessen wird, die tangential an den die Verbindungsflansche miteinander verbindenden Schalenbereich außen, d. h. an die zweite Oberfläche 12 angelegt bzw. als angelegt gedacht wird. Die Verstärkungsrippe 20 überspannt den die Verbindungsflansche 14, 15 und 16, 17 verbindenden Schalenbereich und erstreckt sich wie bevorzugt, aber nur beispielhaft, bis zum äußeren Rand 13 des ersten Verbindungsflansches 14, 15 und auch bis zum äußeren Rand 13 des zweiten Verbindungsflansches 16, 17. Sie steift somit nicht nur den die Verbindungsflansche verbindenden Schalenbereich der Basiswandstruktur 10 aus, indem sie dessen konkave Innenseite überspannt, sondern steift auch unmittelbar den ersten Verbindungsflansch 14, 15 und den zweiten Verbindungsflansch 16, 17 aus.

Die Verstärkungsrippe 20 kann im Verbund der Karosseriestrukturen ebenfalls einen Verbindungsflansch bilden. So kann insbesondere die Karosseriestruktur 4, über die im Wesentlichen ebenfalls Schubkräfte parallel zur Schubkraft F übertragen werden können, unmittelbar auch mit der Verstärkungsrippe 20, optional auch nur mit der Verstärkungsrippe 20 und nicht mit Verbindungsflanschen des Karosserieknotens 5, fest verbunden sein, vorzugsweise mittels Schweißverbindung.

Zur Karosseriestruktur 4 ist noch nachzutragen, dass sie im Ausführungsbeispiel zwar separat von den Karosseriestrukturen 1 und 2 geformt und mit diesen per Fügeverbindung fest verbunden ist, dass sie aber alternativ auch in einem Stück mit entweder der Karosseriestruktur 1 oder der Karosseriestruktur 2 geformt und mittels Fügeverbindung mit der jeweils anderen Karosseriestruktur 1 oder 2 verbunden sein kann. In derartigen Ausführungen kann sich die Karosseriestruktur 1 oder die Karosseriestruktur 2 weiter in die Überlappung mit dem Karosserieknoten 5 erstrecken, um beispielsweise die Karosseriestruktur 1 oder die Karosseriestruktur 2, vorzugsweise beide Karosseriestrukturen 1 und 2, auch unmittelbar mit der Verstärkungsrippe 20 verbinden zu können, wie dies vorstehend für die Karosseriestruktur 4 erläutert wurde.

An die Basiswandstruktur 10 ist ferner das bereits genannte Befestigungselement 25 angeformt. Das Befestigungselement 25 ragt, wie auch die Verstärkungsrippe 20 von der ersten Oberfläche 11 auf. Das Befestigungselement 25 ragt säulenförmig auf und bildet eine zumindest im Wesentlichen zylindrische Umfangswand, die einen entsprechend aufragenden Hohlraum umgibt. Dieser Hohlraum öffnet sich an der zweiten Oberfläche 12, so dass von dort wie in Figur 4 erkennbar durch eine Öffnung 26 ein stift- oder bolzenförmiges Eingriffselement in den Hohlraum des Befestigungselements 25 eingeführt werden kann. Die Umfangswand ist im Inneren, d. h. im Bereich des Hohlraums, mit einem Schraubgewinde versehen. Entsprechend kann es sich bei dem Eingriffselement insbesondere um einen Schraubbolzen handeln. Das Befestigungselement 25 dient der Befestigung einer Radachse, genauer gesagt einer Radaufhängung des Fahrzeugs. Die Eingriffsachse E, im Beispiel Schraubachse, dieser Fügeverbindung verläuft durch die Verstärkungsrippe 20, d. h. die Verstärkungsrippe 20 schneidet die Eingriffsachse E. Die Eingriffsachse E weist wie bevorzugt, aber nur beispielhaft parallel zur Hochachse Z der Fahrzeugkarosserie. Die Verstärkungsrippe 20 erstreckt sich über das Befestigungselement 25 hinweg. Das Befestigungselement 25 ist auch Bestandteil der Verbindungsrippe 20. Durch diese Formgebung wird zum einen die Verstärkungsrippe 20 durch das an den Längsseiten der Verstärkungsrippe 20 wulstig vorstehende Befestigungselement 25 verstärkt. Umgekehrt wird das Befestigungselement 25 durch die Verstärkungsrippe 20 in Längsrichtung der Verstärkungsrippe 20 versteift. Die Verstärkungsrippe 20 versteift das Befestigungselement 25 bis unmittelbar auf dessen Eingriffsfläche für den Eingriff mit dem Eingriffselement, im Beispiel bis auf das Schraubgewinde.

Um das Befestigungselement 25 auch quer zur Längsrichtung X der Verstärkungsrippe 20 zu versteifen, ragen von der ersten Oberfläche 11 an beiden Längsseiten der Verstärkungsrippe 20 jeweils eine weitere Verstärkungsrippe 21 und 22 unmittelbar von der säulenförmig aufragenden Umfangswand des Befestigungselements 25 ab. Die Verstärkungsrippen 21 und 22 ragen wie bevorzugt, aber nur beispielhaft orthogonal zur Verstärkungsrippe 20 ab, im Beispiel erstrecken sie sich zumindest im Wesentlichen parallel zur Querachse Y der Karosserie. Die Verstärkungsrippen 21 sorgen für eine Versteifung und Vergleichmäßigung der Lastverteilung der über das Befestigungselement 25 im Fahrzeugbetrieb eingeleiteten Momente, die von der Radachse im Wesentlichen um eine zur Längsachse X parallele Achse wirken. Im Ausführungsbeispiel stehen die Verstärkungsrippe 20 und die quer hierzu erstreckten Verstärkungsrippen 21 und 22 im Wesentlichen kreuzförmig zueinander. Grundsätzlich könnten die Verstärkungsrippen 21 und 22 oder gegebenenfalls auch noch weitere Verstärkungsrippen auch unter spitzen bzw. stumpfen Winkeln quer zur Verstärkungsrippe 20 weisen. Eine Erstreckung orthogonal zur Verstärkungsrippe 20 wird jedoch bevorzugt.

Zur Versteifung des Karosserieknotens 5 trägt auch ein in einem Abstand von der Verstärkungsrippe 20 längs der Verstärkungsrippe 20 verlaufender Verstärkungssteg 19 bei, den unmittelbar die Basiswandstruktur 10 bildet, indem sie mit einer Längsseite ihres Rands 13 in Ausbildung des Verstärkungsstegs 19 über einen vergleichsweise stark gekrümmten Bereich aufragt. Dem Verstärkungssteg 19 über die Verstärkungsrippe 20 gegenüberliegend ist eine ebenfalls versteifend wirkende lokale Wölbung geformt. Die Verstärkungsrippe 21 erstreckt sich bis in den Verstärkungssteg 19, und die Verstärkungsrippe 22 erstreckt sich zur anderen Seite bis in diese lokale Wölbung. Durch diese Formgebung als solche und Abstützung der Rippen 21 und 22 wird die Steifigkeit des Karosserieknotens 5 und insbesondere des Befestigungselements 25 nochmals erhöht.

Der Karosserieknoten 5 ist im Ganzen als Metallgussknoten geformt. Die Basiswandstruktur 10 und die funktionalen Strukturen des Karosserieknotens 5, im Beispiel die Verstärkungsrippen 20, 21 und 22 und das Befestigungselement 25 sind somit einheitlich, im gleichen Gussprozess entstanden bzw. geformt. Nach dem Guss wird vorzugsweise eine die Duktilität erhöhende Wärmebehandlung des Gussknotens bzw. Karosserieknotens 5 durchgeführt. Der Karosserieknoten 5 besteht vorzugsweise aus Stahl, obgleich ein Leichtmetall oder eine Leichtmetalllegierung als Knotenmaterial nicht ausgeschlossen werden soll. Gegenüber einem Karosserieknoten 5 aus einem Leichtmetall können jedoch die Wandstärken der Basiswandstruktur 10 und der funktionalen Strukturen 20, 21, 22 und 25 verringert werden. Dies erleichtert die Einpassung des Karosserieknotens 5 in die in Schalenbauweise ausgeführte Karosserie. Des Weiteren wird die Integration in die Blechschalenbauweise üblicher Karosserien auch in Bezug auf das Fügen mit den anzuschließenden Karosseriestrukturen erleichtert, insbesondere das Schweißen. In Bezug auf das bevorzugte Schweißen ist auch von Vorteil, dass der Karosserieknoten 5 im Ganzen offenschalig ist, so dass die anzuschließenden Karosseriestrukturen, im Beispiel die Karosseriestrukturen 1 bis 4, mit den flächenhaften Verbindungsflanschen 14 bis 18 mit einfachen Schweißzangen verschweißt werden können.

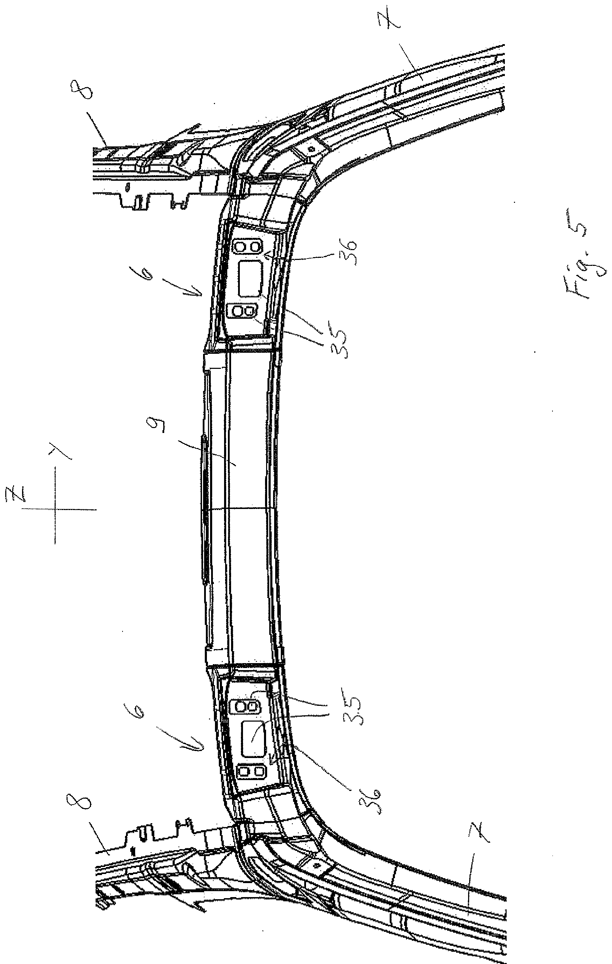

Figur 5 zeigt ein zweites Ausführungsbeispiel für einen Verbund, der mit einem erfindungsgemäßen Karosserieknoten gebildet ist. Bei dem zweiten Ausführungsbeispiel handelt es sich um einen hinteren Dachknoten. In dem hinteren Dachknoten sind als erste Karosseriestruktur 7 eine hintere Säule und als zweite Karosseriestruktur 9 eine hintere Dachquerstrebe mittels eines Karosserieknotens 6 verbunden. Die Säule 7 ist mit einer seitlichen Dachstrebe 8, die im Dachknoten, eine dritte Karosseriestruktur bildet, entweder in einem Stück geformt oder bereits vor dem Fügen mit dem Karosserieknoten 6 gefügt worden, so dass die Karosseriestrukturen 7 und 8 als Einheit mit dem Karosserieknoten 6 gefügt sind. In einer Modifikation könnten die Karosseriestrukturen 7 und 8 jedoch auch erst über den Karosserieknoten 6 verbunden sein.

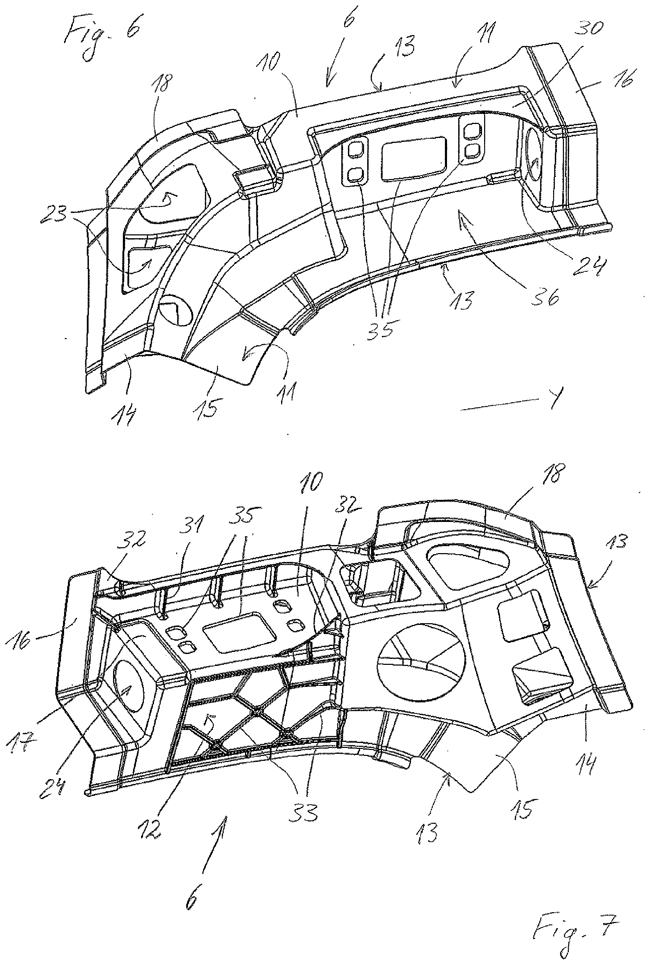

In den Figuren 6 und 7 ist der Karosserieknoten 6 einzeln, herausgelöst aus dem Verbund, in zwei unterschiedlichen Isometrien dargestellt. Figur 6 zeigt den Karosserieknoten 6 in einer perspektivischen Sicht auf eine Rückseite, die im Wesentlichen der Sicht der Figur 5 entspricht, und Figur 7 zeigt den Karosserieknoten 6 in einer perspektivischen Sicht auf seine im eingebauten Zustand in Fahrtrichtung weisende Vorderseite und seine dem Fahrgastraum zugewandte Unterseite.

Auch der Karosserieknoten 6 ist ein offener Schalenkörper. Er weist wie der Karosserieknoten 5 als Grundstruktur eine dünnwandige Basiswandstruktur 10 mit einer ersten Oberfläche 11 (Fig. 6) und einer zweiten Oberfläche 12 (Fig. 7) und einem umlaufenden äußeren Rand 13 auf. Die Basiswandstruktur 10 bildet wie im ersten Ausführungsbeispiel einen ersten Verbindungsflansch 14, 15 zum Fügen mit der ersten Karosseriestruktur 7, einen zweiten Verbindungsflansch 16, 17 zum Fügen mit der zweiten Karosseriestruktur 9 und einen dritten Verbindungsflansch 18, in dem der Karosserieknoten 6 mit der Karosseriestruktur 8 gefügt wird. Mit 23 und 24 sind materialsparende und somit gewichlsreduzierende Ausnehmungen bezeichnet, die wie im ersten Ausführungsbeispiel Durchbrechungen der Basiswandstruktur 10 sind. Der Karosserieknoten 6 unterscheidet sich zwar wegen des anderen Einbauorts in seiner Form erheblich von dem Karosserieknoten 5 des ersten Ausführungsbeispiels, die Ausführungen zum Karosserieknoten 5 gelten jedoch, zumindest soweit die Basiswandstruktur 10 betroffen ist, in gleicher Weise auch für den Karosserieknoten 6 des zweiten Ausführungsbeispiels.

Auch der Karosserieknoten 6 weist Verstärkungsrippen auf, die der Aussteifung dienen. So wird die Basiswandstruktur 10 beispielsweise durch eine Verstärkungsrippe 30 (Figur 6) und optionale weitere Verstärkungsrippen 31, 32 und 33 (Figur 7) versteift.

Der Karosserieknoten 6 besitzt über die Formgebung als offener, wie bevorzugt verrippter Schalenkörper hinaus als Besonderheit, dass er eine Befestigungsstruktur 35 für die Anordnung eines Lagerelements für die bewegliche Lagerung einer Heckklappe aufweist und eine Aufnahme 36 für einen Antrieb für die Heckklappe bildet. Die Befestigungsstruktur 35 wird unmittelbar von der Basiswandstruktur 10 gebildet, indem die Basiswandstruktur 10 mit Durchbrechungen versehen ist, mittels denen ein Lagerelement eines Gelenks der Heckklappe am Karosserieknoten 6 befestigt werden kann. Die Aufnahme 36 wird ebenfalls unmittelbar von der Basiswandstruktur gebildet, indem diese im Bereich der Befestigungsstruktur 35 zu einem zur Heckklappe weisend offenen Aufnahmeraum für den Antrieb geformt ist. Die Verstärkungsrippe 30 überspannt die Aufnahme 36 und versteift die Basiswandstruktur 10 somit im Bereich der Befestigungsstruktur 35. Die Verstärkungsrippen 31, 32 und 33 sorgen für eine weitere Verstärkung insbesondere dieses Bereichs des Karosserieknotens 6. Die Verstärkungsrippe 30 erstreckt sich wie bevorzugt, aber nur beispielhaft, zumindest im Wesentlichen in Querrichtung Y und somit zumindest im Wesentlichen parallel zur Dachquerstrebe 9. Die Verstärkungsrippen 33 sind in der Art eines Fachwerks an einer die Aufnahme 36 überspannenden Wandung als erhaben abragende, flache Versteifungsstege, beispielhaft an der die Rückseite der Aufnahme 36 bildenden Oberfläche 12 geformt.

Die Befestigungsstruktur 35 umfasst wie bevorzugt, aber nur beispielhaft mehrere kleinere Durchbrechungen, die der Befestigung des Antriebs dienen, und eine demgegenüber größere Durchbrechung, die in Bezug auf die kleineren Durchbrechungen beispielhaft zentral gelegen ist und der weiteren Abstützung des Antriebs dient. So kann der Antrieb beispielsweise mittels Bolzen, Stiften, Schrauben und dergleichen Befestigungselemente über die kleineren Durchbrechungen mit dem Karosserieknoten 6 fest gefügt werden und mit einem großflächigeren Stützteil in und vorzugsweise durch die größere zentrale Durchbrechung ragen, so dass die vom Karosserieknoten 6 aufzunehmenden Stützkräfte gleichmäßig und vorteilhaft großflächig in die Basiswandstruktur 10 eingeleitet werden.

Der Antrieb kann insbesondere einen Elektromotor mit einem Stator und einem Rotor umfassen. Der Stator kann fest mit einer Befestigungsstruktur des Antriebs bzw. Motors verbunden und diese mittels der kleineren Durchbrechungen der Befestigungsstruktur 35 an der Basiswandstruktur 10 befestigt werden. Die Befestigungsstruktur des Antriebs bzw. Motors kann ein rückseitig abragendes Stützteil aufweisen, das im montierten Zustand des Antriebs in die größere Durchbrechung der Befestigungsstruktur 35 hinein ragt und von dieser größeren Durchbrechung vorzugsweise eng eingefasst wird, so dass der Antrieb hierdurch zusätzlich auch noch durch Formschluss in unterschiedliche Richtungen abgestützt wird. Der Rotor des Elektromotors kann mit der Heckklappe fest verbunden werden bzw. im befestigten Zustand fest, unbeweglich verbunden sein, so dass ein besonders kompakter Antrieb für die Heckklappe erhalten wird. Der Antrieb ist dafür eingerichtet, die Heckklappe zu öffnen oder zu schließen, vorzugsweise zu öffnen und zu schließen. Die Durchbrechung 24, die in einer die Aufnahme 36 begrenzenden Seitenwand der Basiswandstruktur 10 geformt ist, vorzugsweise wie die weiteren Durchbrechungen 23 im Gussprozess, kann der Durchführung eines oder mehrerer Kabel dienen, über das oder die der Antrieb mit Energie oder Steuersignalen versorgt werden kann.

Bezugszeichen:
- 1: Karosseriestruktur, Schweller
- 2: Karosseriestruktur, Radhaus
- 3: Karosseriestruktur, Querträger
- 4: Karosseriestruktur, Überbrückungsstruktur
- 5: Karosserieknoten
- 6: Karosserieknoten
- 7: Karosseriestruktur, Säule
- 8: Karosseriestruktur, Dachseitenstrebe
- 9: Karosseriestruktur, Dachquerstrebe
- 10: Basiswandstruktur
- 11: erste Oberfläche
- 12: zweite Oberfläche
- 13: Rand
- 14: Verbindungsflansch
- 15: Verbindungsflansch
- 16: Verbindungsflansch
- 17: Verbindungsflansch
- 18: Verbindungsflansch
- 19: Verstärkungssteg
- 20: Verstärkungsrippe
- 21: Verstärkungsrippe
- 22: Verstärkungsrippe
- 23: Ausnehmung
- 24: Ausnehmung
- 25: Befestigungselement
- 26: Öffnung
- 27: -
- 28: -
- 29: -
- 30: Verstärkungsrippe
- 31: Verstärkungsrippe
- 32: Verstärkungsrippe
- 33: Verstärkungsrippe
- 34: -
- 35: Befestigungsstruktur
- 36: Aufnahme

- E: Eingriffsachse
- F: Schubkraft
- X: Längsachse
- Y: Querachse
- Z: Hochachse

## Patentansprüche

1. Karosserieknoten zum Verbinden schalenförmiger Karosseriestrukturen eines Fahrzeugs, der Karosserieknoten umfassend:
(a) eine mehrfach gekrümmte, als offene Schale geformte Basiswandstruktur (10) mit einer ersten Oberfläche (11) und einer zweiten Oberfläche (12),
(b) einen von der Basiswandstruktur (10) gebildeten ersten Verbindungsflansch (14, 15) für eine Verbindung mit einer schalenförmigen ersten Karosseriestruktur (1; 7),
(c) einen von der Basiswandstruktur (10) gebildeten zweiten Verbindungsflansch (16, 17) für eine Verbindung mit einer schalenförmigen zweiten Karosseriestruktur (2; 9),
(d) optional einen von der Basiswandstruktur (10) gebildeten dritten Verbindungsflansch (18) für eine Verbindung mit einer schalenförmigen dritten Karosseriestruktur (3)
(e) und eine Verstärkungsrippe (20; 30), die von der ersten Oberfläche (11) der Basiswandstruktur (10) aufragt,
(f) wobei die Basiswandstruktur (10) und die Verstärkungsrippe (20; 30) gemeinsam in einem Gussprozess als ein dünnwandiger Metallgusskörper, vorzugsweise Stahlgusskörper, geformt sind
(g) und der Karosserieknoten (5; 6) im Ganzen ein offener Schalenkörper ist, **dadurch gekennzeichnet, dass**
(f) die Verstärkungsrippe (20) sich in Richtung auf und bis zu einem äußeren Rand (13) des ersten Verbindungsflansches (14, 15), oder in Richtung auf und bis zu einem äußeren Rand (13) des zweiten Verbindungsflansches (16, 17), erstreckt, um den Karosserieknoten (5; 6) in dem bei der Herstellung eines Verbundes der Karosseriestruktur zugewandten Verbindungsflansch (14, 15, 16, 17) zu verstärken.

2. Karosserieknoten nach Anspruch 1, **dadurch gekennzeichnet, dass** die Verbindungsflansche (14-18) so geformt sind, dass der Karosserieknoten (5; 6) im Bereich der Verbindungsflansche (14-18) mit der ersten Oberfläche (11) oder der zweiten Oberfläche (12) in eine Richtung normal zu dieser Oberfläche und somit von der Seite an die jeweilige Karosseriestruktur (1-4; 7-9) oder die jeweilige Karosseriestruktur (1-4; 7-9) von der Seite an den Karosserieknoten (5; 6) anlegbar ist.

3. Karosserieknoten nach einem der vorhergehenden Ansprüche, **dadurch gekennzeichnet, dass** an der Basiswandstruktur (10), vorzugsweise innerhalb eines äußeren Rands (13) der Basiswandstruktur (10), ein Befestigungselement (25), das vorzugsweise ein Schraubgewinde aufweist, vorgesehen und fest mit der Basiswandstruktur (10) verbunden, vorzugsweise im Gussprozess mit der Basiswandstruktur (10) gemeinsam geformt ist, und die Verstärkungsrippe (20) sich an einer Seite des Befestigungselements (25), vorzugsweise auch an einer anderen Seite des Befestigungselements (25), bis zu dem Befestigungselement (25) erstreckt.

4. Karosserieknoten nach einem der vorhergehenden Ansprüche, **dadurch gekennzeichnet, dass** für eine Befestigung der ersten oder der zweiten Karosseriestruktur (1, 2, 7, 9) oder vorzugsweise einer weiteren Fahrzeugstruktur von der ersten Oberfläche (11) oder der zweiten Oberfläche (12) der Basiswandstruktur (10) ein vorzugsweise im Gussprozess mit der Basiswandstruktur (10) und der Verstärkungsrippe (15) gemeinsam geformtes Befestigungselement (25) aufragt.

5. Karosserieknoten nach dem vorhergehenden Anspruch, **dadurch gekennzeichnet, dass** das Befestigungselement (25) eine von der Oberfläche (11) aufragende Umfangswand aufweist, die einen entsprechend aufragenden Hohlraum umgibt, der in einer Draufsicht auf die Basiswandstruktur (10) gesehen eine Öffnung (26) aufweist, durch die zum Herstellen der Verbindung ein Eingriffselement einführbar und im Hohlraum befestigbar ist.

6. Karosserieknoten nach einem der Ansprüche 4 bis 6, **dadurch gekennzeichnet, dass** von der ersten Oberfläche (11) oder der zweiten Oberfläche (12) der Basiswandstruktur (10) eine weitere Verstärkungsrippe (21, 22) aufragt und sich an einer Seite des Befestigungselements (25), vorzugsweise auch an einer anderen Seite des Befestigungselements (25), bis zu dem Befestigungselement (25) erstreckt und die Verstärkungsrippen (20, 21, 22) zumindest bei dem Befestigungselement (25) unter einem Winkel größer 0° und kleiner 180° zueinander weisen.

7. Karosserieknoten nach einem der Ansprüche 4 bis 7, **dadurch gekennzeichnet, dass** die Verstärkungsrippe (20, 21, 22) in einer Draufsicht auf die Basiswandstruktur (10) gesehen das Befestigungselement (25) schneidet und sich vorzugsweise über das Befestigungselement (25) hinweg erstreckt.

8. Karosserieknoten nach einem der Ansprüche 4 bis 8, **dadurch gekennzeichnet, dass** das Befestigungselement (25) ein Schraubgewinde, vorzugsweise ein Innengewinde, aufweist und die Verstärkungsrippe (20, 21, 22) sich bei Ausführung des Befestigungselements (25) mit einem Innengewinde vorzugsweise bis an eine mit dem Innengewinde versehene Umfangswand des Befestigungselements (25) erstreckt.

9. Karosserieknoten nach einem der vorhergehenden Ansprüche, **dadurch gekennzeichnet, dass** die Basiswandstruktur (10) oder die Verstärkungsrippe (20, 21, 22) zur Reduzierung des Gewichts wenigstens eine im Gussprozess, vorzugsweise mittels verlorener Form, geformte Ausnehmung (23, 24) aufweist.

10. Karosserieknoten nach einem der vorhergehenden Ansprüche, **dadurch gekennzeichnet, dass** an oder in der Basiswandstruktur (10) ein Lagerungselement für eine relativ zum Karosserieknoten (6) bewegliche Lagerung eines Anbauteils, vorzugsweise einer Heckklappe, oder eines Dämpfers eines bewegliches Anbauteils, oder eine Befestigungsstruktur (35) für die Befestigung solch eines Lagerungselements vorgesehen ist oder die Basiswandstruktur (10) solch eine Befestigungsstruktur (35) bildet.

11. Karosserieknoten nach einem der vorhergehenden Ansprüche, **dadurch gekennzeichnet, dass** an oder in der Basiswandstruktur (10) eine Befestigungsstruktur (35) oder ein weiterer Verbindungsflansch für die Befestigung eines Antriebsmotors eines beweglichen Anbauteils, vorzugsweise einer Heckklappe, vorgesehen ist oder die Basiswandstruktur (10) eine Aufnahme (36) für einen Antriebsmotor eines beweglichen Anbauteils, vorzugsweise einer Heckklappe, bildet, wobei die Verstärkungsrippe (30) vorzugsweise die Aufnahme (36) überspannt und dadurch versteift.

12. Karosserieknoten nach einem der vorhergehenden Ansprüche, **dadurch gekennzeichnet, dass** der Karosserieknoten (5) einen Schweller als die erste Karosseriestruktur (1) und einen Längsträger als die zweite Karosseriestruktur (2), optional auch einen Querträger als dritte Karosseriestruktur (3) oder eine Radachse des Fahrzeugs, verbindet.

13. Karosserieknoten nach einem der vorhergehenden Ansprüche, **dadurch gekennzeichnet, dass** der Karosserieknoten (6) eine hintere Säule als die erste Karosseriestruktur (7) und eine Dachquerstrebe als die zweite Karosseriestruktur (9) verbindet.

14. Verbund von in Schalenbauweise ausgeführten Karosseriestrukturen (1-4; 7-9), vorzugsweise Blechschalenbauteile, die jeweils mit einem Karosserieknoten (5; 6) nach einem der vorhergehenden Ansprüche, der im Kraftfluss zwischen den Karosseriestrukturen (1-4; 7-9) angeordnet ist, um bei Belastung auftretende Kräfte und Momente auf die Karosseriestrukturen zu verteilen, zu dem Verbund gefügt sind, wobei die Verstärkungsrippe (20) vorzugsweise ebenfalls einen Verbindungsflansch bildet, der mit wenigstens einer der Karosseriestrukturen (1-4) gefügt ist.

## Claims

1. A bodywork node for connecting shell-shaped bodywork structures of a vehicle, said bodywork node comprising:
(a) a multiply curved base wall structure (10) which is shaped as an open shell and comprises a first surface (11) and a second surface (12);
(b) a first connecting flange (14, 15), formed by the base wall structure (10), for connecting to a shell-shaped first bodywork structure (1; 7);
(c) a second connecting flange (16, 17), formed by the base wall structure (10), for connecting to a shell-shaped second bodywork structure (2; 9);
(d) optionally, a third connecting flange (18), formed by the base wall structure (10), for connecting to a shell-shaped third bodywork structure (3);
(e) and a reinforcing rib (20; 30) which projects from the first surface (11) of the base wall structure (10),
(f) wherein the base wall structure (10) and the reinforcing rib (20; 30) are formed together in a casting process as a thin-walled cast metal body, preferably a cast steel body,
(g) and the bodywork node (5; 6) as a whole is an open shell body, **characterised in that**
(h) the reinforcing rib (20) extends in the direction of and up to an outer edge (13) of the first connecting flange (14, 15) or in the direction of and up to an outer edge (13) of the second connecting flange (16, 17) in order to reinforce the bodywork node (5) in the connecting flange (14, 15, 16, 17) which faces the bodywork structure when the composite is being manufactured.

2. The bodywork node according to Claim 1, **characterised in that** the connecting flanges (14-18) are formed such that the bodywork node (5; 6) can be placed onto the respective bodywork structure (1-4; 7-9) in the region of the connecting flanges (14-18) via the first surface (11) or second surface (12) in a direction normal to said surface and thus from the side, or the respective bodywork structure (1-4; 7-9) can be placed onto the bodywork node (5; 6) from the side.

3. The bodywork node according to any one of the preceding claims, **characterised in that** a fastening element (25), which preferably comprises a screw thread, is provided on the base wall structure (10), preferably within an outer edge (13) of the base wall structure (10), and fixedly connected to the base wall structure (10), preferably formed together with the base wall structure (10) in the casting process, and the reinforcing rib (20) extends on one side of the fastening element (25), and preferably also on another side of the fastening element (25), up to the fastening element (25).

4. The bodywork node according to any one of the preceding claims, **characterised in that** in order to fasten the first or second bodywork structure (1, 2; 7, 9) or preferably another vehicle structure, a fastening element (25) which is preferably formed together with the base wall structure (10) and the reinforcing rib (20) in the casting process projects from the first surface (11) or the second surface (12) of the base wall structure (10).

5. The bodywork node according to the preceding claim, **characterised in that** the fastening element (25) comprises a circumferential wall which projects from the first surface (11) and surrounds a correspondingly projecting hollow space which, as viewed in a plan view onto the base wall structure (10), comprises an opening (26) through which an engaging element can be inserted and fastened in the hollow space in order to establish the connection.

6. The bodywork node according to any one of Claims 4 to 6, **characterised in that** another reinforcing rib (21, 22) projects from the first surface (11) or second surface (12) of the base wall structure (10) and extends on one side of the fastening element (25), and preferably also on another side of the fastening element (25), up to the fastening element (25), and the reinforcing ribs (20, 21, 22) point at an angle of more than 0° and less than 180° with respect to each other, at least at the fastening element (25).

7. The bodywork node according to any one of Claims 4 to 7, **characterised in that** the reinforcing rib (20, 21, 22) intersects the fastening element (25), as viewed in a plan view onto the base wall structure (10), and preferably extends beyond the fastening element (25).

8. The bodywork node according to any one of Claims 4 to 8, **characterised in that** the fastening element (25) comprises a screw thread, preferably an inner thread, and the reinforcing rib (20, 21, 22) preferably extends up to and onto a circumferential wall of the fastening element (25), which is provided with the inner thread, when the fastening element (25) is embodied with an inner thread.

9. The bodywork node according to any one of the preceding claims, **characterised in that** in order to reduce the weight, the base wall structure (10) or the reinforcing rib (20, 21, 22) comprises at least one cavity (23, 24) which is formed in the casting process, preferably by means of a disposable mould.

10. The bodywork node according to any one of the preceding claims, **characterised in that** a mounting element is provided on or in the base wall structure (10), or a fastening structure (35) for fastening such a mounting element is provided on or in the base wall structure (10), or the base wall structure (10) forms such a fastening structure (35), in order to mount an attachment part, preferably a hatchback, such that it can move relative to the bodywork node (6) or to mount a damper for a movable attachment part.

11. The bodywork node according to any one of the preceding claims, **characterised in that** a fastening structure (35) or another connecting flange for fastening a drive motor of a movable attachment part, preferably a hatchback, is provided on or in the base wall structure (10), or the base wall structure (10) forms a receptacle (36) for a drive motor of a movable attachment part, wherein the reinforcing rib (30) preferably spans and thus reinforces the receptacle (36).

12. The bodywork node according to any one of the preceding claims, **characterised in that** the bodywork node (5) connects a sill as the first bodywork structure (1) and a longitudinal beam as the second bodywork structure (2), and optionally also a crossbeam as a third bodywork structure (3) or a wheel axle of the vehicle.

13. The bodywork node according to any one of the preceding claims, **characterised in that** the bodywork node (6) connects a rear column as the first bodywork structure (7) and a transverse roof strut as the second bodywork structure (9).

14. A composite of bodywork structures (1-4; 7-9) which are embodied in a shell construction, preferably sheet metal shell component parts, which are each joined to a bodywork node (5; 6) according to any one of the preceding claims, to form the composite, wherein the bodywork node (5; 6) is arranged between the bodywork structures (1-4; 7-9) in the flow of force in order to disperse forces and moments which arise under stress conditions over the bodywork structures, wherein the reinforcing rib (20) preferably likewise forms a connecting flange which is joined to at least one of the bodywork structures (1-4).

## Revendications

1. Noeud de carrosserie pour assembler des structures de carrosserie en forme de coque d'un véhicule, le noeud de carrosserie comportant :
(a) une structure de paroi de base (10) formée comme une coque ouverte, plusieurs fois incurvée et ayant une première surface (11) et une seconde surface (12),
(b) une première semelle d'assemblage (14, 15) formée à partir de la structure de paroi de base (10) pour un assemblage avec une première structure de carrosserie en forme de coque (1 ; 7),
(c) une deuxième semelle d'assemblage (16, 17) formée à partir de la structure de paroi de base (10) pour un assemblage avec une deuxième structure de carrosserie en forme de coque (2 ; 9),
(d) facultativement une troisième semelle d'assemblage (18) formée à partir de la structure de paroi de base (10) pour un assemblage avec une troisième structure de carrosserie en forme de coque (3),
(e) et une nervure de renfort (20 ; 30) qui fait saillie à partir de la première surface (11) de la structure de paroi de base (10),
(f) dans lequel la structure de paroi de base (10) et les nervures de renfort (20 ; 30) sont formées conjointement dans un procédé de coulée comme un corps moulé en métal à paroi mince, de préférence un corps moulé en acier,
(g) et le noeud de carrosserie (5 ; 6) est, dans l'ensemble, un corps de coque ouverte, **caractérisé en ce que**
(f) les nervures de renfort (20) s'étendent en direction d'un bord extérieur (13) de la première semelle d'assemblage (14, 15) et jusqu'à celui-ci, ou en direction d'un bord extérieur (13) de la seconde semelle d'assemblage (16, 17) et jusqu'à celui-ci, afin de renforcer le noeud de carrosserie (5 ; 6) dans la semelle d'assemblage (14, 15, 16, 17) dirigée vers la structure de carrosserie lors de la réalisation d'une structure composite.

2. Noeud de carrosserie selon la revendication 1, **caractérisé en ce que** les semelles d'assemblage (14 à 18) sont formées de sorte que le noeud de carrosserie (5 ; 6) peut être appliqué dans la zone des semelles d'assemblage (14 à 18) avec la première surface (11) ou la seconde surface (12) dans une direction normale à cette surface et ainsi par le côté sur la structure de carrosserie (1 à 4 ; 7 à 9) respective, ou la structure de carrosserie (1 à 4 ; 7 à 9) respective peut être appliquée par le côté sur le noeud de carrosserie (5 ; 6).

3. Noeud de carrosserie selon l'une des revendications précédentes, **caractérisé en ce qu'**un élément de fixation (25) comportant de préférence un pas de vis (10) est prévu sur la structure de paroi de base (10), de préférence à l'intérieur d'un bord extérieur (13) de la structure de paroi de base (10), et est fixement assemblé à la structure de paroi de base (10), et est de préférence formé lors du procédé de coulée conjointement avec la structure de paroi de base (10), et les nervures de renfort (20) s'étendent d'un côté de l'élément de fixation (25), de préférence également d'un autre côté de l'élément de fixation (25), jusqu'à l'élément de fixation (25).

4. Noeud de carrosserie selon l'une des revendications précédentes, **caractérisé en ce qu'**un élément de fixation (25) de préférence formé pendant le procédé de coulée conjointement avec la structure de paroi de base (10) et les nervures de renfort (15) fait saillie pour une fixation de la première ou de la deuxième structure de carrosserie (1, 2 ; 7, 9) ou de préférence d'une autre structure de véhicule à partir de la première surface (11) ou de la seconde surface (12) de la structure de paroi de base (10).

5. Noeud de carrosserie selon la revendication précédente, **caractérisé en ce que** l'élément de fixation (25) comporte une paroi circonférentielle faisant saillie à partir de la première surface (11) qui entoure une cavité faisant saillie de manière correspondante et comportant une ouverture (26) lorsque la structure de paroi de base (10) est vue de dessus, ouverture à travers laquelle un élément de prise peut être introduit pour réaliser l'assemblage et peut être fixé dans la cavité.

6. Noeud de carrosserie selon l'une des revendications 4 à 6, **caractérisé en ce qu'**une nervure de renfort supplémentaire (21, 22) fait saillie à partir de la première surface (11) ou de la seconde surface (12) de la structure de paroi de base (10) et s'étend d'un côté de l'élément de fixation (25), de préférence également d'un autre côté de l'élément de fixation (25), jusqu'à l'élément de fixation (25), et les nervures de renfort (20, 21, 22) présentent au moins un angle par rapport à l'élément de fixation (25) supérieur à 0° et inférieur à 180°.

7. Noeud de carrosserie selon l'une des revendications 4 à 7, **caractérisé en ce que** la nervure de renfort (20, 21, 22) lorsque la structure de paroi de base (10) est vue de dessus, coupe l'élément de fixation (25) et s'étend de préférence au-dessus de l'élément de fixation (25).

8. Noeud de carrosserie selon l'une des revendications 4 à 8, **caractérisé en ce que** l'élément de fixation (25) comporte un filetage de vis (10), de préférence un filetage intérieur, et la nervure de renfort (20, 21, 22) s'étend de préférence jusqu'à une paroi circonférentielle pourvue du filetage intérieur de l'élément de fixation (25), lors de la réalisation de l'élément de fixation (25) avec un filetage intérieur.

9. Noeud de carrosserie selon l'une des revendications précédentes, **caractérisé en ce que** la structure de paroi de base (10) ou la nervure de renfort (20, 21, 22) comporte au moins un évidement (23, 24) formé dans un procédé de coulée, de préférence au moyen d'un moule perdu, afin de réduire le poids.

10. Noeud de carrosserie selon l'une des revendications précédentes, **caractérisé en ce qu'**est prévu un élément de support pour un support d'une pièce rapportée mobile par rapport au noeud de carrosserie (6), de préférence un hayon, ou d'un amortisseur d'une pièce rapportée mobile, ou une structure de fixation (35) pour la fixation d'un tel élément de support sur ou dans la structure de paroi de base (10), ou la structure de paroi de base (10) forme une telle structure de fixation (35).

11. Noeud de carrosserie selon l'une des revendications précédentes, **caractérisé en ce qu'**est prévue une structure de fixation (35) ou une semelle d'assemblage supplémentaire pour la fixation d'un moteur d'entraînement d'une pièce rapportée mobile, de préférence un hayon, sur ou dans la structure de paroi de base (10), ou la structure de paroi de base (10) forme un évidement (36) pour un moteur d'entraînement d'une pièce rapportée mobile, de préférence un hayon, dans lequel la nervure de renfort (30) chevauche de préférence l'évidement (36) et le renforce ainsi.

12. Noeud de carrosserie selon l'une des revendications précédentes, **caractérisé en ce que** le noeud de carrosserie (5) assemble un bas de caisse en tant que première structure de carrosserie (1) et un longeron en tant que deuxième structure de carrosserie (2), facultativement également une traverse en tant que troisième structure de carrosserie (3) ou un essieu de roues du véhicule.

13. Noeud de carrosserie selon l'une des revendications précédentes, **caractérisé en ce que** le noeud de carrosserie (6) assemble une colonne arrière en tant que première structure de carrosserie (7) et une barre de support de toit en tant que deuxième structure de carrosserie (9).

14. Structure composite monocoque composée de structures de carrosserie (1 à 4 ; 7 à 9), de préférence des pièces de coque en tôle, qui sont respectivement assemblées à la structure composite avec un noeud de carrosserie (5 ; 6) selon l'une des revendications précédentes, agencé dans le flux de forces entre les structures de carrosserie (1 à 4 ; 7 à 9) afin de répartir des forces et des couples apparaissant lors du chargement sur les structures de carrosserie, dans lequel la nervure de renfort (20) forme de préférence également une semelle d'assemblage qui est assemblée avec au moins une des structures de carrosserie (1 à 4).
